# EUROPEAN PATENT APPLICATION

(11) **EP 1 630 462 A1**
(43) Date of publication of application: **01.03.2006**
(21) Application number: 05013079.8
(22) Date of filing: 17.06.2005
(51) Int. Cl.: F16J 15/32

(54) **Sealing apparatus provided with rotary encoder**

(30) Priority: 26.08.2004 JP 2004246215
(71) Applicant: Carl Freudenberg KG, 69469 Weinheim (DE)
(72) Inventor: Kanzaki, Go NOK Corporation, Fukushima-shi Fukushima 960-1193 (JP); Yarimizu, Kenichi NOK Corporation, Fukushima-shi Fukushima 960-1193 (JP)

(57) **Abstract**

An object of the invention is to reduce an attaching space of a sealing apparatus provided with a rotary encoder in an axial direction. A sealing apparatus is provided with a housing (11), a sealing apparatus main body (12) which is attached to the housing (11) and in which an inner peripheral portion of a seal lip (122) is brought into slidably close contact with an outer peripheral surface of a crank shaft (2) inserted through an inner periphery of the housing (11), a pulsar ring (13) attached to the crank shaft (2), integrally rotated with the crank shaft (2), and magnetized to a magnetizing layer (132) at a predetermined pitch in a circumferential direction, and a magnetic sensor (14) attached to the housing (11) and detecting rotation of the magnetizing layer (132) of the pulsar ring (13), and a detection surface (14a) of the magnetic sensor (14) is exposed from a cutout (121f) formed in an attaching portion to the housing (11) of the sealing apparatus main body (12), and is disposed facing to the magnetizing layer (132) of the pulsar ring (13).

## Description

### BACKGROUND OF THE INVENTION

### Field of the Invention

The present invention relates to a sealing apparatus sealing an outer periphery of a rotation body in which a rotary encoder for detecting a rotation is provided.

### Description of the Related Art

In a sealing apparatus provided as a means for axially sealing a crank shaft of an engine, there has been conventionally known a structure provided in parallel with a rotary encoder for detecting a rotation speed and a rotation angle of the crank shaft, for example, disclosed in Japanese Unexamined Patent Publication No. 2004-93554.

In other words, the sealing apparatus is structured such that a seal lip supported to an inner periphery of a non-rotation housing and made of a synthetic resin such as a polytetrafluorethylene (PTFE) or the like is brought into slidable contact with an outer peripheral surface of a rear end portion of a crank shaft, a pulse wheel magnetized by multiple poles at a predetermined pitch in a circumferential direction is attached to a sleeve in an outer periphery, and a magnetic sensor facing to a magnetizing sleeve of the pulse wheel from an outer peripheral side is attached to the housing in adjacent to the sealing apparatus in an axial direction. The magnetic sensor constitutes a magnetic rotary encoder together with the pulse wheel. Since a polarity of a magnetic field applied to the magnetic sensor is alternately changed in correspondence to an integral rotation of the pulse wheel together with the crank shaft, the magnetic sensor generates a pulse having a waveform corresponding to the change of the magnetic field, and detects the rotation of the crank shaft.

However, in accordance with the conventional sealing apparatus provided with the rotary encoder described in the Japanese Unexamined Patent Publication No. 2004-93554, since a sealing apparatus main body and the magnetic sensor are independently positioned, and the sealing apparatus main body and the pulse wheel are positioned in parallel in an axial direction, there is a problem that an attaching space is increased.

### SUMMARY OF THE INVENTION

The present invention is made by taking the points mentioned above into consideration, and a technical object of the present invention is to reduce an attaching space of a sealing apparatus provided with a rotary encoder in an axial direction.

As a means for effectively achieving the technical object mentioned above, in accordance with a first aspect of the present invention, there is provided a sealing apparatus provided with a rotary encoder, comprising: a stationary-side member; a sealing apparatus main body which is attached to the stationary-side member and in which an inner peripheral portion of a seal lip is brought into slidably close contact with an outer peripheral surface of a rotation shaft inserted through an inner periphery of the stationary-side member; a pulsar ring attached to the rotation shaft, integrally rotated with the rotation shaft, and magnetized at a predetermined pitch in a circumferential direction; and a magnetic sensor attached to the stationary-side member to detect rotation of the pulsar ring, wherein a detection surface of the magnetic sensor is exposed from a cutout formed in an attaching portion to the stationary-side member of the sealing apparatus main body or a window portion, and disposed facing a magnetizing portion of the pulsar ring.

In accordance with a second aspect of the present invention, there is provided a sealing apparatus provided with a rotary encoder, comprising: a stationary-side member; a sealing apparatus main body which is attached to the stationary-side member and in which an inner peripheral portion of a seal lip is brought into slidably close contact with an outer peripheral surface of a rotation shaft inserted through an inner periphery of the stationary-side member; a pulsar ring attached to the rotation shaft, integrally rotated with the rotation shaft, and magnetized at a predetermined pitch in a circumferential direction; and a magnetic sensor attached to the stationary-side member to detect rotation of the pulsar ring, wherein an attaching portion of the sealing apparatus main body to the stationary-side member is formed of a non-magnetic material, and a detection surface of the magnetic sensor is disposed facing a magnetizing portion of the pulsar ring positioned on an inner peripheral side via the attaching portion of the sealing apparatus main body.

In accordance with the sealing apparatus provided with the rotary encoder on the basis of the first aspect of the present invention, since the detection surface of the magnetic sensor attached to the stationary-side member is disposed facing to the magnetizing portion of the pulsar ring via the cutout or the window portion formed in the attaching ring corresponding to the attaching portion of the sealing apparatus main body to the stationary-side member, it is not necessary to arrange the sealing apparatus main body and the magnetic sensor in accordance with a positional relationship that they are arranged in the axial direction, and it is possible to arrange the magnetic sensor, the magnetizing portion of the pulsar ring and the sealing apparatus main body in accordance with a positional relationship that they are arranged in a diametrical direction, whereby it is possible to reduce an attaching space in the axial direction.

In accordance with the sealing apparatus provided with the rotary encoder on the basis of the second aspect of the present invention, since the detection surface of the magnetic sensor attached to the stationary-side member is disposed facing to the magnetizing portion of the pulsar ring via the attaching ring corresponding to the attaching portion of the sealing apparatus main body to the stationary-side member, and the magnetic diction by the magnetic sensor is secured by transmitting the magnetic flux from the magnetizing portion of the pulsar ring while setting the attaching ring to the non-magnetic body, it is not necessary to arrange the sealing apparatus main body and the magnetic sensor in accordance with a positional relationship that they are arranged in the axial direction, and it is possible to arrange the magnetic sensor, the magnetizing portion of the pulsar ring and the sealing apparatus main body in accordance with a positional relationship that they are arranged in a diametrical direction, whereby it is possible to reduce an attaching space in the axial direction.

### BRIEF DESCRIPTION OF THE DRAWINGS

Fig. 1 is a half cross sectional view showing a sealing apparatus provided with a rotary encoder in accordance with a first embodiment of the present invention, by cutting along a plane passing through an axis;
Fig. 2 is a perspective view of a pulsar ring in Fig. 1;
Fig. 3 is a half cross sectional view showing a sealing apparatus provided with a rotary encoder in accordance with a second embodiment of the present invention, by cutting along a plane passing through an axis;
Fig. 4 is a half cross sectional view showing a sealing apparatus provided with a rotary encoder in accordance with a third embodiment of the present invention, by cutting along a plane passing through an axis;
Fig. 5 is a half cross sectional view showing a sealing apparatus provided with a rotary encoder in accordance with a fourth embodiment of the present invention, by cutting along a plane passing through an axis;
Fig. 6 is a half cross sectional view showing a sealing apparatus provided with a rotary encoder in accordance with a fifth embodiment of the present invention, by cutting along a plane passing through an axis; and
Fig. 7 is a half cross sectional view showing a sealing apparatus provided with a rotary encoder in accordance with a sixth embodiment of the present invention, by cutting along a plane passing through an axis.

### DESCRIPTION OF THE PREFERRED EMBODIMENT

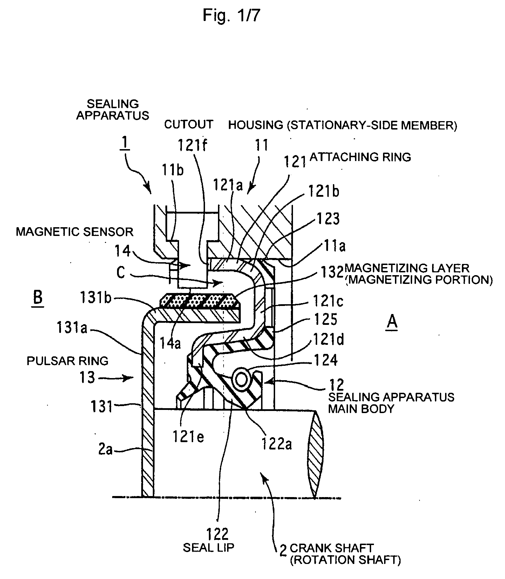

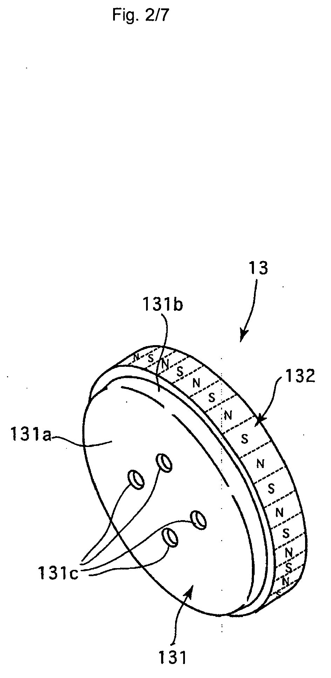

A description will be in detail given below of a preferable embodiment of a sealing apparatus provided with a rotary encoder in accordance with the present invention with reference to the accompanying drawings. First, Fig. 1 is a half cross sectional view showing a sealing apparatus provided with a rotary encoder in accordance with a first embodiment, by cutting along a plane passing through an axis, and Fig. 2 is a perspective view of a pulsar ring in Fig. 1.

First, in Fig. 1, reference numeral 1 denotes a sealing apparatus provided with a rotary encoder (hereinafter, refer simply to as a sealing apparatus) in accordance with the present invention, and reference numeral 2 denotes a rear portion of a crank shaft protruding from a rear portion of an engine block 2. The crank shaft 2 corresponds to a rotation shaft described in claim 1, and passes through an inner periphery of a journal portion (not shown) of a crank case in an engine, in a right side of the drawing. In other words, the right side in the drawing shows a crank chamber A in which an engine oil to be sealed exists, and a left side in the drawing shows an atmospheric air side, that is, an engine external space B.

The sealing apparatus 1 in accordance with the first embodiment is provided with a non-rotation housing 11 attached to a cylinder block (not shown) of an automotive engine, a sealing apparatus main body 12 attached to the housing 11, whereby an inner peripheral portion of a seal lip 122 is brought into slidably close contact with an outer peripheral surface of the crank shaft 2 inserted through an inner periphery of the housing 11, a pulsar ring 13 attached to the crank shaft 2 and integrally rotated with the crank shaft 2, and a magnetic sensor 14 attached to the housing 11 and detecting a rotation of the pulsar ring 13. In this case, the housing 11 corresponds to a stationary-side member described in claim 1 or 2.

The sealing apparatus main body 12 is constituted by an attaching ring 121 pressure inserted and fitted to an inner peripheral surface 11 a of the housing 11, a seal lip 122 and an outer peripheral seal portion 123 integrally formed with the attaching ring 121, and an extension spring 124 attached to an outer peripheral portion of a leading end of the seal lip 122.

The attaching ring 121 is manufactured by punching a metal plate such as a steel plate or the like, and is constituted by an outer peripheral cylinder portion 121 a pressure inserted and fitted to the inner peripheral surface 11 a of the housing 11, a gasket support portion 121b formed in a taper shape so as to have a smaller diameter from the outer peripheral cylinder portion 121 a toward the crank chamber A, a diametrical-direction portion 121c extending therefrom to an inner peripheral side, a conical tube portion 121d extending to an opposite side to the crank chamber A from an inner periphery thereof, and an inner peripheral flange portion 121e extending to an inner peripheral side from an end portion thereof. The outer peripheral cylinder portion 121 a of the attaching ring 121 corresponds to the attaching portion to the stationary-side member described in claim 1.

The seal lip 122 and the outer peripheral seal portion 123 are made of a rubber-like elastic material, and the seal lip 122 extends from a base portion 122b integrally vulcanized and adhered to the inner peripheral flange portion 121e in the attaching ring 121 in such a manner that the leading end portion 122a is directed to the crank chamber A side. Further, the outer peripheral seal portion 123 is connected to the base portion 122b of the seal lip 122 via an elastic layer 125 integrally formed in such a manner as to cover a surface of the crank chamber A side of the attaching ring 121, and is integrally formed with an outer periphery of the gasket support portion 121b in the attaching ring 121 so as to be interposed with a predetermined collapse margin with respect to the inner peripheral surface 11 a of the housing 11.

The pulsar ring 13 is constituted by a holder 131 attached to a rear end surface 2a of the crank shaft 2 via a plurality of attaching bolts (not shown), and a cylindrical magnetizing layer 132 integrally provided in the holder 131.

The holder 131 of the pulsar ring 13 is manufactured by punching a magnetic body metal plate in a closed-end cylindrical shape, and is constituted by a disc portion 131 a, and a cylinder portion 131b extended into an annular space C between the outer peripheral cylinder portion 121a and the conical cylinder portion 121d of the attaching ring 121 in the sealing apparatus main body 12 from an outer periphery of the disc portion 131a. In this case, reference symbol 131c in Fig. 2 denotes a bolt insertion hole for inserting the attaching bolt. The attaching bolt fixing the pulsar ring 13 can, for example, share with a bolt for attaching a flywheel (not shown) to the end surface 2a of the crank shaft 2.

On the other hand, the magnetizing layer 132 of the pulsar ring 13 corresponds to the magnetizing portion described in claim 1 or 2, is integrally provided in an outer peripheral surface of the cylinder portion 131b, is made of a synthetic resin in which a magnetic powder, for example, a ferrite powder or the like is mixed, a rubber material or a ferromagnetic metal, and is constituted by a cylindrical multipolar magnet in which S poles and N poles are alternately magnetized at a predetermined pitch in a circumferential direction. Further, a portion having a different magnetizing pitch is provided in one position in the circumferential direction of the magnetizing layer 132, thereby forming a crank angle measurement origin for detecting a specific position, for example, a top dead center of a piston of the engine or the like.

The magnetic sensor 14 is arranged at one position in the circumferential direction in the outer periphery of the magnetizing layer 132 of the pulsar ring 13, and is fixed to the sensor attaching portion 11b provided in the housing 11 in a non-rotation state. Further, a cutout 121f is formed at one position in the circumferential direction of the outer peripheral cylinder portion 121a of the attaching ring 121 corresponding to the attaching portion described in claim 1, and a detection surface 14a of the magnetic sensor 14 is exposed to the inner peripheral side of the outer peripheral cylinder portion 121a from the cutout 121f and is faced to the outer peripheral surface of the magnetizing layer 132 of the pulsar ring 13 so as to be close in a radial direction.

The sealing apparatus 1 provided with the structure mentioned above is structured, as shown in Fig. 1, such that the sealing apparatus main body 12 is pressure inserted and fitted to the inner peripheral surface 11a of the housing 11 in the outer peripheral cylinder portion 121a of the attaching ring 121 thereof, and is closely fitted with the proper collapse margin in the outer peripheral seal portion 123, and the seal edge 122a formed in the inner periphery of the leading end portion of the seal lip 122 in the sealing apparatus main body 12 is brought into slidable contact with the outer peripheral surface of the crank shaft 2, thereby inhibiting the engine oil or the like in the crank chamber A side from leaking into the engine external space B.

Further, since the pulsar ring 13 integrally rotates with the crank shaft 2, whereby the N poles and the S poles magnetized in the magnetizing layer 132 alternately pass in the rotational direction through the inner peripheral side of the detection surface 14a of the magnetic sensor 14, the magnetic sensor 14 generates a pulse signal having a waveform corresponding to the change of the magnetic field. Accordingly, it is possible to detect a rotation speed and a rotation angle of the crank shaft 2 from the output signal so as to contribute to various controls.

Further, in accordance with this structure, since the detection surface 14a of the magnetic sensor 14 attached to the housing 11 is faced to the outer peripheral surface of the magnetizing layer 132 of the pulsar ring 13 positioned within the annular space C between the outer peripheral cylinder portion 121a and the conical tube portion 121d of the attaching ring 121 via the cutout 121f of the attaching ring 121 of the sealing apparatus main body 12 pressure inserted to the inner peripheral surface 11 a of the housing 11, the magnetic sensor 14, the magnetizing layer 132 of the pulsar ring 13 and the sealing apparatus main body 12 have a positional relationship that they are arranged in the diametrical direction, and can reduce the attaching space with respect to the axial direction.

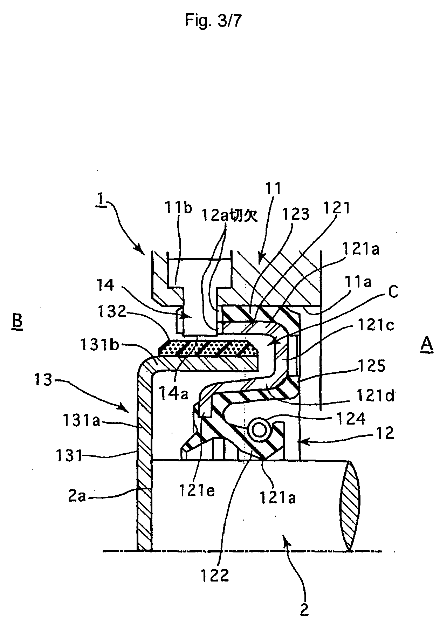

Next, Fig. 3 is a half cross sectional view showing a sealing apparatus provided with a rotary encoder in accordance with a second embodiment of the present invention, by cutting along a plane passing through an axis. In Fig. 3, a right side shows the crank chamber A in which the engine oil to be sealed exists, and a left side shows the atmospheric air side, that is, the engine external space B.

In the second embodiment, the outer peripheral seal portion 123 in the sealing apparatus main body 12 is formed in such a manner as to cover the outer peripheral surface of the outer peripheral cylinder portion 121 a in the attaching ring 121. In other words, in this second embodiment, the outer peripheral cylinder portion 121 a of the attaching ring 121 and the outer peripheral seal portion 123 correspond to the attaching portion to the stationary-side member described in claim 1, the sealing apparatus main body 12 is pressure inserted and fitted to the inner peripheral surface 11 a of the housing 11 via the outer peripheral seal portion 123, the detection surface 14a of the magnetic sensor 14 fixed to the sensor attaching portion 11 b of the housing 11 is exposed to an inner periphery of the cutout 12a from the cutout 12a formed in a thickness direction (a diametrical direction) astride the outer peripheral cylinder portion 121 a and the outer peripheral seal portion 123, and is faced to the outer peripheral surface of the magnetizing layer 132 of the pulsar ring 13 so as to be close in the radial direction. The other portions are basically structured in the same manner as those in Fig. 1.

In accordance with the second embodiment, in the same manner as the first embodiment, the seal lip 122 of the sealing apparatus main body 12 is brought into slidable contact with the outer peripheral surface of the crank shaft 2, whereby the sealing apparatus main body 12 inhibits the engine oil or the like in the crank chamber A side from leaking to the engine external space B. Further, since the detection surface 14a of the magnetic sensor 14 attached to the housing 11 is faced to the outer peripheral surface of the magnetizing layer 132 of the pulsar ring 13 positioned within the annular space C between the outer peripheral cylinder portion 121a and the conical tube portion 121d of the attaching ring 121, via the attaching ring 121 of the sealing apparatus main body 12 pressure inserted to the inner peripheral surface 11 a of the housing 11 and the cutout 12a of the outer peripheral seal portion 123, the magnetic sensor 14, the magnetizing layer 132 of the pulsar ring 13 and the sealing apparatus main body 12 have the positional relationship that they are arranged in the diametrical direction, in the same manner as that of the previous first embodiment, and it is possible to reduce the attaching space with respect to the axial direction.

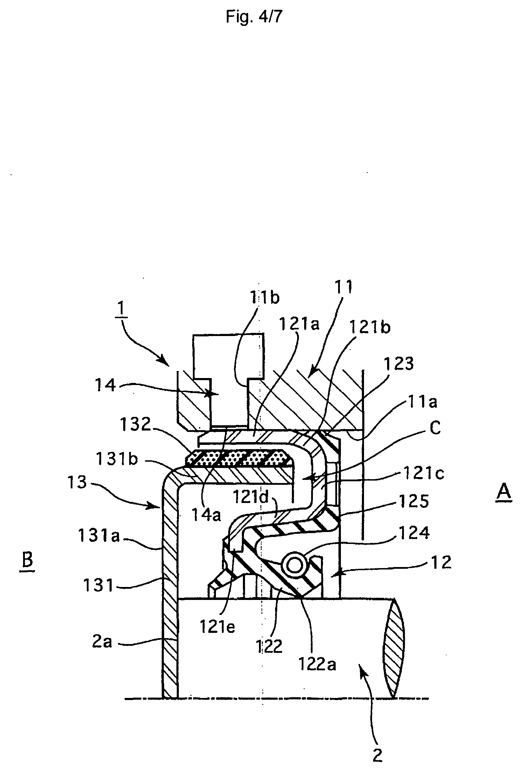

Next, Fig. 4 is a half cross sectional view showing a sealing apparatus provided with a rotary encoder in accordance with a third embodiment of the present invention, by cutting along a plane passing through an axis. In Fig. 4, a right side shows the crank chamber A in which the engine oil to be sealed exists, and a left side shows the atmospheric air side, that is, the engine external space B.

In the third embodiment, the attaching ring 121 in the sealing apparatus main body 12 is manufactured by punching a non-magnetic metal plate such as an aluminum plate or the like, and is formed in the same cross sectional shape as that in the previous Fig. 1. In other words, the attaching ring 121 is constituted by the outer peripheral cylinder portion 121a pressure inserted and fitted to the inner peripheral surface 11a of the housing 11, the gasket support portion 121b formed in a taper shape so as to have a smaller diameter from the outer peripheral cylinder portion 121 a toward the crank chamber A side, the diametrical-direction portion 121c, the conical tube portion 121 d extending from the inner periphery thereof to the opposite side to the crank chamber A, and the inner peripheral flange portion 121e extending from the end portion thereof to the inner peripheral side.

The outer peripheral cylinder portion 121a of the attaching ring 121 corresponds to the attaching portion to the stationary-side member described in claim 2. The detection surface 14a of the magnetic sensor 14 fixed to the sensor attaching portion 11b of the housing 11 in a non-rotation state in one position in the circumferential direction in the outer periphery of the magnetizing layer 132 of the pulsar ring 13 is positioned in the outer peripheral side of the outer peripheral cylinder portion 121a of the attaching ring 121. On the other hand, since the magnetizing layer 132 of the pulsar ring 13 is formed in the outer peripheral surface of the cylinder portion 131b of the holder 131 inserted into the annular space C between the outer peripheral cylinder portion 121 a and the conical tube portion 121d of the attaching ring 121, the detection surface 14a of the magnetic sensor 14 is faced to the outer peripheral surface of the magnetizing layer 132 of the pulsar ring 13 in the radial direction via the outer peripheral cylinder portion 121 a of the attaching ring 121 made of the non-magnetic body. The other portions are basically structured in the same manner as that in Fig. 1.

The sealing apparatus 1 provided with the structure mentioned above is structured, in the same manner as the previously described first embodiment, such that the sealing apparatus main body 12 is pressure inserted and fitted to the inner peripheral surface 11a of the housing 11 in the outer peripheral cylinder portion 121a of the attaching ring 121 thereof, and is closely fitted with the proper collapse margin in the outer peripheral seal portion 123, and the seal edge 122a formed in the inner periphery of the leading end portion of the seal lip 122 in the sealing apparatus main body 12 is brought into slidable contact with the outer peripheral surface of the crank shaft 2, thereby inhibiting the engine oil or the like in the crank chamber A side from leaking into the engine external space B.

Further, in accordance with this structure, the detection surface 14a of the magnetic sensor 14 attached to the housing 11 is faced to the magnetizing layer 132 of the pulsar ring 13 in the radial direction via the outer peripheral cylinder portion 121a of the attaching ring 121, however, since the outer peripheral cylinder portion 121a is made of the non-magnetic body (having a permeability), and transmits the magnetic flux from the magnetizing layer 132 of the pulsar ring 13, the magnetic field applied to the magnetic sensor 14 is changed on the basis of a matter that the N poles and the S poles magnetized in the magnetizing layer 132 of the pulsar ring 13 alternately pass through the inner periphery of the outer peripheral cylinder portion 121a in the rotational direction. Accordingly, since the magnetic sensor 14 outputs the pulse signal having the waveform corresponding to the magnetic field change, the magnetic sensor 14 can detect the rotation speed and the rotation angle of the crank shaft 2 and contribute to various controls.

Further, for this reason, it is not necessary to set the attaching ring 121 of the sealing apparatus main body 12 and the magnetic sensor 14 to the positional relationship that they are arranged in the axial direction, it is possible to set the magnetic sensor 14, the magnetizing layer 132 of the pulsar ring 13 and the sealing apparatus main body 12 to the positional relationship that they are arranged in the diametrical direction, and it is possible to reduce the attaching space with respect to the axial direction.

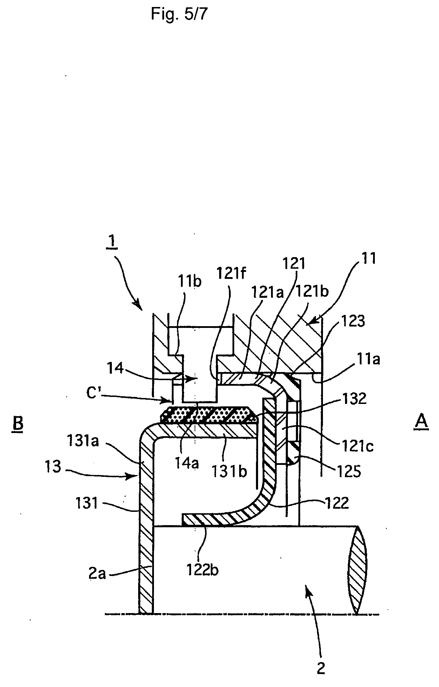

Next, Fig. 5 is a half cross sectional view showing a sealing apparatus provided with a rotary encoder in accordance with a fourth embodiment of the present invention, by cutting along a plane passing through an axis. In Fig. 5, a right side shows the crank chamber A in which the engine oil to be sealed exists, and a left side shows the atmospheric air side, that is, the engine external space B.

The fourth embodiment is basically structured in the same manner as that in Fig. 1 except the structure that the sealing apparatus main body 12 is provided with a seal lip 122 made of a synthetic resin. In detail, the sealing apparatus main body 12 is constituted by the attaching ring 121 pressure inserted and fitted to the inner peripheral surface 11 a of the housing 11, the seal lip 122 in which an outer peripheral portion is fixed to the attaching ring 121 in a close sealing state, and the outer peripheral seal portion 123 integrally formed with the attaching ring 121.

The attaching ring 121 is manufactured by punching a metal plate such as a steel plate or the like, and is constituted by the outer peripheral cylinder portion 121a pressure inserted and fitted to the inner peripheral surface 11a of the housing 11, the gasket support portion 121b formed in a taper shape so as to have a smaller diameter from the outer peripheral cylinder portion 121a toward the crank chamber A, and the diametrical-direction portion 121c extending therefrom to an inner peripheral side. The outer peripheral cylinder portion 121a of the attaching ring 121 corresponds to the attaching portion to the stationary-side member described in claim 1.

The seal lip 122 is formed in a disc sheet shape by a synthetic resin having a low friction coefficient and an excellent abrasion resistance such as a polytetrafluorethylene (PTFE) or the like, and is structured such that an outer peripheral portion is fixed to the inner side of the diametrical-direction portion 121c in the attaching ring 121 in a close contact state, and an inner peripheral portion is brought into slidably close contact with the outer peripheral surface of the crank shaft 2 in a state of extending to an opposite side to the crank chamber A. Further, the outer peripheral seal portion 123 is integrally formed with the outer periphery of the gasket supporting portion 121b in the attaching ring 121 by the rubber-like elastic material, and is interposed with respect to the inner peripheral surface 11 a of the housing 11 with a predetermined collapse margin.

The magnetic sensor 14 is arranged at one position in the circumferential direction in the outer periphery of the magnetizing layer 132 of the pulsar ring 13, and is fixed to the sensor attaching portion 11b provided in the housing 11 in a non-rotation state, in the same manner as that in the previously described Fig 1. Further, the cutout 121f is formed at one position in the circumferential direction of the outer peripheral cylinder portion 121a of the attaching ring 121 in the sealing apparatus main body 12, and the detection surface 14a of the magnetic sensor 14 is exposed to the inner peripheral side of the outer peripheral cylinder portion 121a from the cutout 121 f and is faced to the outer peripheral surface of the magnetizing layer 132 of the pulsar ring 13 so as to be close in a radial direction.

The structure, the attaching aspect and the like of the pulsar ring 13 are approximately the same as those in the previously described Fig. 1.

Accordingly, the sealing apparatus in accordance with the fourth embodiment inhibits the engine oil or the like in the crank chamber A side from leaking to the engine external space B on the basis of the structure that the cylindrical inner peripheral portion 122b of the seal lip 122 in the sealing apparatus main body 12 is brought into slidably close contact with the outer peripheral surface of the crank shaft 2. Further, since the pulsar ring 13 integrally rotates with the crank shaft 2, whereby the N poles and the S poles magnetized in the magnetizing layer 132 alternately pass in the rotational direction through the inner peripheral side of the detection surface 14a of the magnetic sensor 14, the magnetic sensor 14 generates a pulse signal having a waveform corresponding to the change of the magnetic field. Accordingly, it is possible to detect a rotation speed and a rotation angle of the crank shaft 2 from the output signal so as to contribute to various controls.

Further, in accordance with this structure, in the same manner as that in the previously described Fig. 1, since the detection surface 14a of the magnetic sensor 14 attached to the housing 11 is faced to the outer peripheral surface of the magnetizing layer 132 of the pulsar ring 13 positioned in an inner peripheral space C' of the outer peripheral cylinder portion 121a of the attaching ring 121 via the cutout 121f of the attaching ring 121 of the sealing apparatus main body 12 pressure inserted to the inner peripheral surface 11a of the housing 11, the magnetic sensor 14, the magnetizing layer 132 of the pulsar ring 13 and the sealing apparatus main body 12 have a positional relationship that they are arranged in the diametrical direction, and can reduce the attaching space with respect to the axial direction.

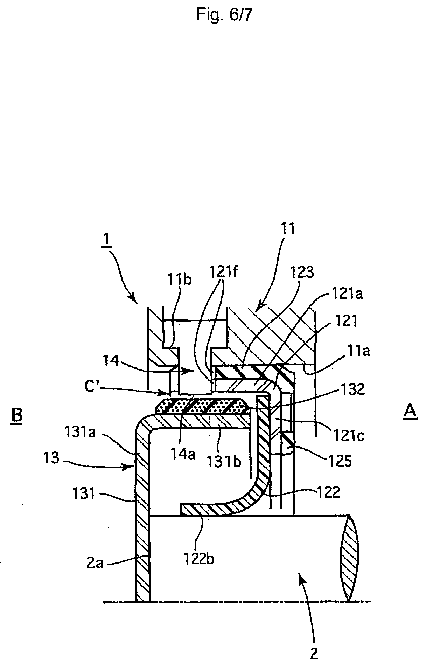

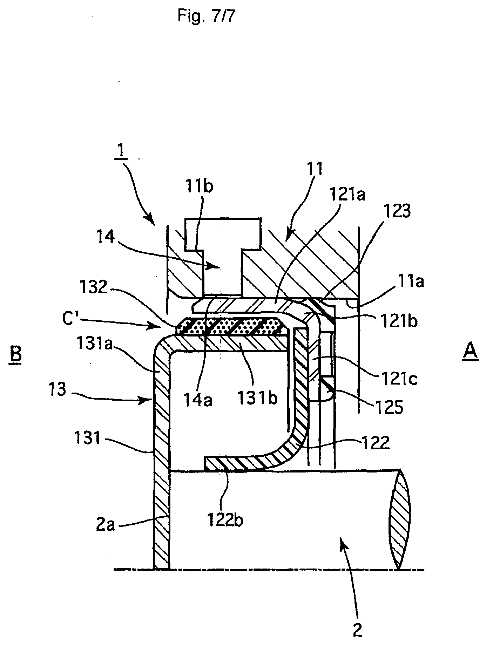

Next, Fig. 6 is a half cross sectional view showing a sealing apparatus provided with a rotary encoder in accordance with a fifth embodiment of the present invention, by cutting along a plane passing through an axis, and Fig. 7 is a half cross sectional view showing a sealing apparatus provided with a rotary encoder in accordance with a sixth embodiment of the present invention, by cutting along a plane passing through an axis. In Fig. 6 or 7, a right side shows the crank chamber A in which the engine oil to be sealed exists, and a left side shows the atmospheric air side, that is, the engine external space B.

The fifth embodiment shown in Fig. 6 is structured such that the outer peripheral seal portion 123 in the sealing apparatus main body 12 having the synthetic resin seal lip 122 in the same manner as Fig. 5 is formed so as to cover the outer peripheral surface of the outer peripheral cylinder portion 121 a of the attaching ring 121 in the same manner as the previously described Fig. 3, that is, the sealing apparatus main body 12 is pressure inserted and fitted to the inner peripheral surface 11a of the housing 11 via the outer peripheral seal portion 123, and the detection surface 14a of the magnetic sensor 14 fixed to the sensor attaching portion 11b of the housing 11 is exposed to the inner peripheral side of the cutout 12a from the cutout 12a formed in the thickness direction (the diametrical direction) astride the outer peripheral cylinder portion 121a and the outer peripheral seal portion 123, and is faced to the outer peripheral surface of the magnetizing layer 132 of the pulsar ring 13 in the radial direction so as to be close to each other.

Accordingly, the same effects as those of the second embodiment shown in Fig. 3 can be achieved.

Further, the sixth embodiment shown in Fig. 7 is structured such that the attaching ring 121 in the sealing apparatus main body 12 having the synthetic resin seal lip 122 in the same manner as Fig. 5 is manufactured by punching the non-magnetic metal plate such as the aluminum plate or the like in the same manner as the previously described Fig. 4. Further, the detection surface 14a of the magnetic sensor 14 fixed to the sensor attaching portion 11 b of the housing 11 in the non-rotation state is positioned in the outer peripheral side of the outer peripheral cylinder portion 121 a of the attaching ring 121, that is, is faced to the outer peripheral surface of the magnetizing layer 132 of the pulsar ring 13 existing in the inner peripheral side of the outer peripheral cylinder portion 121a in the radial direction via the outer peripheral cylinder portion 121a constituted by the non-magnetic body.

Therefore, in accordance with this structure, the same effects as those of the third embodiment shown in Fig. 4 can be achieved.

In this case, the cutout 121f shown in Fig. 1 or 5, or the cutout 12a shown in Fig. 3 or 6 may be replaced by a window portion (for example, a circular hole).

## Claims

1. A sealing apparatus provided with a rotary encoder, comprising: a stationary-side member (11); a sealing apparatus main body (12) which is attached to the stationary-side member (11) and in which an inner peripheral portion of a seal lip (122) is brought into slidably close contact with an outer peripheral surface of a rotation shaft (2) inserted through an inner periphery of the stationary-side member (11); a pulsar ring (13) attached to the rotation shaft (2), integrally rotated with the rotation shaft (2), and magnetized at a predetermined pitch in a circumferential direction; and a magnetic sensor (14) attached to the stationary-side member (11) to detect rotation of the pulsar ring (13), wherein a detection surface (14a) of the magnetic sensor (14) is exposed from a cutout (121f) formed in an attaching portion to the stationary-side member (11) of the sealing apparatus main body (12) or a window portion, and disposed facing a magnetizing portion (132) of the pulsar ring (13).

2. A sealing apparatus provided with a rotary encoder, comprising: a stationary-side member (11); a sealing apparatus main body (12) which is attached to the stationary-side member (11) and in which an inner peripheral portion of a seal lip (122) is brought into slidably close contact with an outer peripheral surface of a rotation shaft (2) inserted through an inner periphery of the stationary-side member (11); a pulsar ring (13) attached to the rotation shaft (2), integrally rotated with the rotation shaft (2), and magnetized at a predetermined pitch in a circumferential direction; and a magnetic sensor (14) attached to the stationary-side member (11) to detect rotation of the pulsar ring (13), wherein an attaching portion of the sealing apparatus main body (12) to the stationary-side member (11) is formed of a non-magnetic material, and a detection surface (14a) of the magnetic sensor (14) is disposed facing a magnetizing portion (132) of the pulsar ring (13) positioned on an inner peripheral side via the attaching portion of the sealing apparatus main body (12).
